# EUROPÄISCHE PATENTSCHRIFT

(11) **EP 3 418 461 B1**
(45) Veröffentlichungstag und Bekanntmachung des Hinweises auf die Patenterteilung: **15.04.2020**
(21) Anmeldenummer: 18175974.7
(22) Anmeldetag: 05.06.2018
(51) Int. Cl.: E04B 1/86, G10K 11/168, G10K 11/172, E04B 1/82, E04B 1/74, E04B 1/84

(54) **SCHALLABSORPTIONSELEMENT**
ACOUSTIC ABSORPTION ELEMENT
ÉLÉMENT D'ABSORPTION DE BRUIT

(30) Priorität: 19.06.2017 AT 505082017
(43) Veröffentlichungstag der Anmeldung: 26.12.2018
(73) Patentinhaber: Art anno GmbH, 8510 Stainz (AT)
(72) Erfinder: FUCHS, Christian, 8510 Stainz (AT)
(74) Vertreter: Sonn & Partner Patentanwälte

(56) Entgegenhaltungen:
- DE-A1- 2 458 260
- DE-A1-102014 221 202
- DE-U1-202011 050 486
- FR-A- 1 108 073

## Beschreibung

Die Erfindung betrifft ein Schallabsorptionselement mit einer Umhüllung und zumindest einer darin enthaltenen Absorptionsschicht aus schallabsorbierendem Material und einer der Schallquelle zugewandten Frontschicht mit Öffnungen zur Aufnahme des von der Schallquelle ausgehenden Schalls.

Elemente zum Absorbieren von Schall sind in unzähligen Formen und Ausführungen erhältlich. Beispielsweise bestehen bekannte Schallabsorptionselemente aus Kunststoffmaterialien, Gipskartonplatten oder auch Holzmaterialien. Vor allem in tieferen Frequenzbereichen zwischen 250 Hz und 500 Hz liegen die erzielbaren Absorptionsgrade meistens nicht über 60 %.

Die DE 20 2011 050 486 U1 beschreibt ein Element zur Wärme- und/oder Schalldämmung, wobei ein Dämmstoffelement aus Wellpappe mit darin enthaltenen Dämmstoffen angeordnet ist. Dabei steht die Erzielung eines mechanisch stabilen Elements mit erhöhter Dämmleistung im Vordergrund, was durch eine entsprechende Stützstruktur und einer Füllung mit einem Gas erzielt wird. Die DE 20 2011 050 486 U1 offenbart die Merkmale des Oberbegriffs des Anspruchs 1.

Beispielsweise beschreibt auch die DE 10 2014 221 202 A1 einen Schallabsorber mit einer Frontseite aus Pappe und/oder Karton. Abgesehen von unzureichenden Absorptionsgraden ist die gezielte Absorption bestimmter Frequenzen, insbesondere tiefer Frequenzen, mit derartigen Schallabsorbern nicht möglich.

Ein schallabsorbierendes Paneel mit zwei Schichten mit durchgängigen Kanälen unterschiedlichen Durchmessers ist beispielsweise aus der DE 26 50 886 A1 bekannt geworden. Dieses schallabsorbierende Paneel zeichnet sich durch einen relativ hohen Geräuschverminderungskoeffizienten aus, ist aber vom Aufbau relativ aufwändig.

Ein Fußbodenpaneel mit schallabsorbierenden Eigenschaften wird beispielsweise in der DE 10 2009 041 099 A1 beschrieben, wobei verschiedene Schichten mit unterschiedlich großen Hohlräumen vorgesehen sind.

Die EP 2 937 483 A1 zeigt ein Schallabsorptionselement mit zwei Schichten aus Wellpappe mit unterschiedlich großen Durchgängen bzw. Öffnungen.

Die DE 39 132 555 A1 beschreibt eine schalldämmende Abdeckplatte mit einem Wabengitter, welches gemäß der US 2010/108435 A1 auch in einer Ebene mit unterschiedlich großen Öffnungen versehen sein kann.

Schließlich zeigt die GB 2 434 482 A eine Konstruktion eines Schallschutzelements, bei dem mehrere ebene Paneele über scharnierartige Verbindungen in einer zick-zack-Form angeordnet werden.

Darüber hinaus werden bei vielen bekannten Schallabsorptionselementen keine oder nicht ausschließlich ökologische Grundmaterialien eingesetzt. Schließlich sind Schallabsorptionselemente des Standes der Technik häufig schwierig zu montieren.

Die Aufgabe der vorliegenden Erfindung besteht in der Schaffung eines Schallabsorptionselements, welches besonders gut auf die zu absorbierenden Frequenzen des Schalls abgestimmt werden kann und möglichst gute Schallabsorptionswerte aufweist. Das Schallabsorptionselement soll einfach aufgebaut und somit kostengünstig herstellbar sein und vorzugsweise aus ökologischen Materialien aufgebaut sein. Nachteile bekannter Schallabsorptionselemente sollen vermieden oder zumindest reduziert werden.

Gelöst wird die erfindungsgemäße Aufgabe dadurch, dass als Frontschicht zumindest eine aus Wellpappe gebildete Schall-Leitungsschicht mit durchgehenden Kanälen mit zumindest zwei verschiedenen Größen vorgesehen ist, und die Kanäle der zumindest einen Schall-Leitungsschicht durch die Hohlräume zwischen wellenförmig angeordneten Wänden und Deckschichten und allfälligen Zwischenschichten der Wellpappe gebildet sind, und dass die zumindest eine Schall-Leitungsschicht vor der Absorptionsschicht angeordnet ist, und wobei die Oberfläche der äußersten aus Wellpappe gebildeten Schall-Leitungsschicht zur Erzeugung reliefartiger Strukturen dreidimensional bearbeitet ist. Die zumindest eine Schall-Leitungsschicht mit den durchgehenden Kanälen leitet den Schall in die darunter liegende zumindest eine Absorptionsschicht aus schallabsorbierendem Material weiter. Die Kanäle der zumindest einen Schall-Leitungsschicht weisen unterschiedliche Größe bzw. unterschiedlichen Querschnitt auf, wodurch eine optimale Abstimmbarkeit auf die jeweiligen zu absorbierenden Frequenzen erzielt wird. Durch diese Maßnahme kann eine besonders gute Einstellung der Absorption bestimmter Frequenzen erzielt werden. Neben der Größe der Kanäle der zumindest einen Schall-Leitungsschicht kann auch die Dicke der Schall-Leitungsschicht entsprechend variiert und auf die jeweiligen zu absorbierenden Frequenzen abgestimmt werden. Die zudest eine Schall-Leitungsschicht ist aus Wellpappe gebildet, wobei die Kanäle durch die Hohlräume zwischen wellenförmig angeordneten Wänden und Deckschichten und allfälligen Zwischenschichten der Wellpappe gebildet sind. Wellpappe ist besonders kostengünstig erhältlich und in verschiedenen Ausführungsformen, beispielsweise als feingliedrige Wellpappe mit sogenannten E-, F- oder G-Wellen oder als grobgliedriger Wellpappe mit sogenannten A-, B- oder C-Wellen verfügbar. Neben den niedrigen Kosten von Wellpappe ist auch die Umweltverträglichkeit ein weiterer Vorteil. Durch die dreidimensionale Bearbeitung der Oberfläche der äußersten Schall-Leitungsschicht können die Gestaltungsmöglichkeiten des Schallabsorbtionselements erhöht werden.

Gemäß einem weiteren Merkmal der Erfindung ist die zumindest eine Schall-Leitungsschicht aus zumindest einem Stück Wellpappe mit der Länge nach verlaufenden Kanälen gebildet, deren Deckschichten und allfällige Zwischenschichten in regelmäßigen Abständen durchschnitten sind, sodass die Wellpappe zick-zack-förmig zusammenlegbar ist und somit die Schall-Leitungsschicht mit zwischen der Oberseite und Unterseite durchgängigen Kanälen gebildet ist. Dies stellt eine besonders einfache und kostengünstige Herstellmöglichkeit des Schallabsorptionselement dar, wobei übliche Wellpappe zum Aufbau des Schallabsorptionselements verwendet werden kann.

Wenn die Wellpappe in den oben genannten regelmäßigen Abständen Schlitze oder dergl. zur Aufnahme von Stabilisierungsleisten im zusammengelegten Zustand der Wellpappe aufweist, kann eine einfache Fixierung der zick-zack-förmig zusammengelegten Wellpappe erzielt werden, wobei als Stabilisierungsleisten beispielsweise Hartfaserstreifen mit einem Querschnitt entsprechend den oben genannten Schlitzen oder dergl. verwendet werden können.

Alternativ oder zusätzlich zu der oben genannten Maßnahme der Stabilisierung bzw. Fixierung kann die zick-zack-förmig zusammengelegte Wellpappe auch verklebt sein. Hierbei hat sich Wasserglas als geeignetes Klebemittel bewährt.

Vorteilhafterweise ist die Wellpappe mit einer Imprägnierung, insbesondere aus Wasserglas, versehen, um die Widerstandsfähigkeit des Schallabsorptionselements zu erhöhen und darüber hinaus dem Schallabsorptionselement entsprechende Brandschutzeigenschaften zu verleihen. Auch die oben genannten Stabilisierungsleisten oder andere Bestandteile des Schallabsorptionselements können mit einer Imprägnierung, insbesondere aus Wasserglas, versehen sein.

Gemäß einem weiteren Merkmal der Erfindung beträgt die Größe der einen Kanäle der zumindest einen Schall-Leitungsschicht zwischen 5 mm² und 10 mm² und die Größe der zweiten Kanäle der zumindest einen Schall-Leitungsschicht vorzugsweise zwischen 15 mm² und 25 mm². Derartige Dimensionen der Kanäle der Schall-Leitungsschicht(en) haben sich als besonders geeignet herausgestellt, insbesondere für das Absorbieren tiefer Frequenzen im Bereich zwischen 250 Hz und 500 Hz. Bei einer Ausführungsform mit zumindest zwei übereinander angeordneten Schall-Leitungsschichten weist die der Schallquelle näher gelegene Schall-Leitungsschicht vorzugsweise die Kanäle mit der größeren Größe bzw. dem größeren Querschnitt und die darunter liegende Schall-Leitungsschicht, welche der Absorptionsschicht näher gelegen ist, vorzugsweise die Kanäle mit der kleineren Größe bzw. dem kleineren Querschnitt auf.

Wenn die Umhüllung Löcher aufweist, oder aus porösem Material, beispielsweise Polyurethan-Schaum besteht, kann einerseits das Gesamtgewicht des Schallabsorptionselements verringert werden und andererseits auch Schall, der über diese Löcher oder porösen Stellen in das Schallabsorptionselement eintritt, absorbiert werden. Die Löcher oder Schlitze in der Umhüllung können auch zur Aufnahme von Stabilisierungsleisten oder anderen Bestandteilen des Schallabsorptionselements dienen.

Die Löcher in der Umhüllung können beispielsweise eine Größe zwischen 5 mm² und 30 mm² aufweisen. Derartige Dimensionen haben sich in Bezug auf die Gewichtsreduktion aber auch Schallabsorption als ideal erwiesen. Die Löcher können kreisförmig gestaltet sein, aber auch eine andere Form aufweisen.

Wenn die Umhüllung klappbar ausgebildet ist, kann der Aufbau sowie Transport der Komponenten des Schallabsorptionselements vereinfacht werden und Platz bei der Lagerung der Bestandteile gespart werden. Je nach Form der Umhüllung (es sind Schachtelformen aber auch andere geometrische oder organische Formen denkbar) sind wenige oder auch mehr Einzelteile für die Umhüllung erforderlich, welche miteinander verbunden, insbesondere miteinander verklebt, werden können.

Gemäß einem weiteren Merkmal der Erfindung ist die Umhüllung aus Holz-Werkstoffen, Polyurethan-Schaum, Wellpappe oder mineralischen Materialien gebildet. Derartige Materialien zeichnen sich durch Umweltverträglichkeit, niedriges Gewicht, geringe Kosten und/oder leichte Bearbeitbarkeit aus.

Zur Schaffung eines ökologischen Schallabsorptionselements ist zumindest eine Absorptionsschicht aus Schafwolle, Hanf, Zellulose und bzw. oder Steinwolle gebildet. Neben pflanzlichen Materialien können natürlich auch Kunststoffmaterialien zur Anwendung kommen.

Die zumindest eine Absorptionsschicht weist vorzugsweise eine Dicke zwischen 5 cm und 10 cm, insbesondere 7 cm bis 8 cm auf. Derartige Dimensionen für die Absorptionsschicht haben sich als besonders geeignet herausgestellt. Insbesondere bei der Absorption tiefer Frequenzen werden dickere Absorptionsschichten vorteilhaft sein.

Die Schall-Leitungsschicht(en) kann (können) eine Dicke zwischen 5 cm und 10 cm, insbesondere 7 cm bis 8 cm, aufweisen. Wie bereits oben erwähnt, kann durch unterschiedliche Dicke der Schall-Leitungsschichten mit unterschiedlicher Größe der Kanäle eine Einstellung auf die Absorption bestimmter Frequenzen erzielt werden.

Weiters kann über der äußersten Schall-Leitungsschicht eine Abdeckschicht, vorzugsweise aus textilem Material, beispielsweise Jute, Schafwolle, Hanfwolle oder Baumwolle, angeordnet sein. Durch eine solche Abdeckschicht können die darunterliegenden Schall-Leitungsschichten bzw. deren Kanäle vor Verschmutzung geschützt werden und auch Einfluss auf das äußere Erscheinungsbild des Schallabsorptionselements genommen werden.

Auf der Abdeckschicht oder der äußersten Schall-Leitungsschicht kann eine poröse Beschichtung, beispielsweise Farben, Putze, pastöse Materialien oder dergl., aufgebracht werden. Durch derartige Beschichtungen kann wieder Einfluss auf das Aussehen des Schallabsorptionselements genommen werden.

Wenn an der Umhüllung zumindest eine Montagevorrichtung angeordnet ist, kann die Befestigung des Schallabsorptionselements beispielsweise an einer Wand oder Decke erleichtert werden. Als Montagevorrichtungen kommen Haken oder dergl. für eine Wand- oder Deckenmontage, aber auch Standelemente für eine freistehende Platzierung in Frage.

Die zumindest eine Absorptionsschicht und bzw. oder die zumindest eine Schall-Leitungsschicht kann mit der Umhüllung verklebt sein. Durch eine Verklebung der zumindest einen Absorptionsschicht und der zumindest einen Schall-Leitungsschicht mit der Umhüllung, welche vorzugsweise mit biologischen Klebestoffen erfolgt, kann eine Fixierung der Einzelteile des Schallabsorptionselements erzielt werden.

Die vorliegende Erfindung wird anhand der beigefügten Zeichnungen, welche Ausführungsformen des erfindungsgemäßen Schallabsorptionselements zeigen, näher erläutert. Darin zeigen:
Fig. 1A eine Variante des Schallabsorptionselements mit zwei Schall-Leitungsschichten;
Fig. 1B Draufsichten auf Ausschnitte der Schall-Leitungsschichten des Schallabsorptionselements gemäß Fig. 1A;
Fig. 2A eine Variante des Schallabsorptionselements mit nur einer Schall-Leitungsschicht;
Fig. 2B die Draufsicht auf einen Ausschnitt der Schall-Leitungsschicht des Schallabsorptionselements gemäß Fig. 2A;
Fig. 3A und 3B einen bevorzugten Aufbau der Schall-Leitungsschicht des Schallabsorptionselements durch ein zick-zack-förmig angeordnetes Stück Wellpappe; und
Fig. 4A und 4B den Aufbau eines Schallabsorptionselements mit einer Schall-Leitungsschicht.

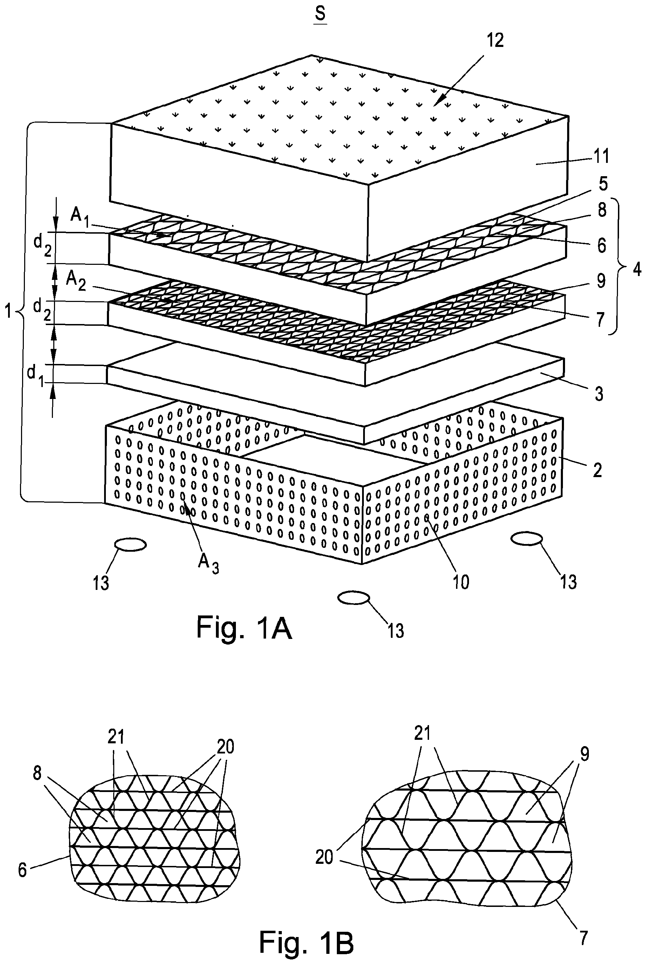

Fig. 1A zeigt eine Variante eines Schallabsorptionselements 1, welches eine Umhüllung 2 beinhaltet, die im gegenständlichen Fall schachtelförmig ausgebildet ist und zumindest seitlich Löcher 10 aufweist. Die Löcher 10 in der Umhüllung 2 können beispielsweise eine Größe A₃ zwischen 5 mm² und 30 mm² aufweisen. Neben einer quaderförmigen Gestalt der Umhüllung 2 sind auch andere geometrische Formen, und insbesondere auch organische Formen denkbar. Die Umhüllung 2 kann aus mehreren Einzelteilen bestehen, welche lösbar oder klappbar miteinander verbunden, oder auch miteinander verklebt oder anderweitig verbunden sein können.

Das Schallabsorptionselement 1 enthält zumindest eine Absorptionsschicht 3 aus schallabsorbierendem Material, beispielsweise Schafwolle, Hanf, Zellulose und bzw. oder Steinwolle. Die Dicke d₁ der zumindest einen Absorptionsschicht 3 wird an die jeweiligen Anforderungen entsprechend angepasst. Insbesondere zur Absorption tiefer Frequenzen können dickere Absorptionsschichten 3 gewählt werden. Beispiele für die Dicke d₁ sind 5 cm bis 10 cm, insbesondere 7 cm bis 8 cm.

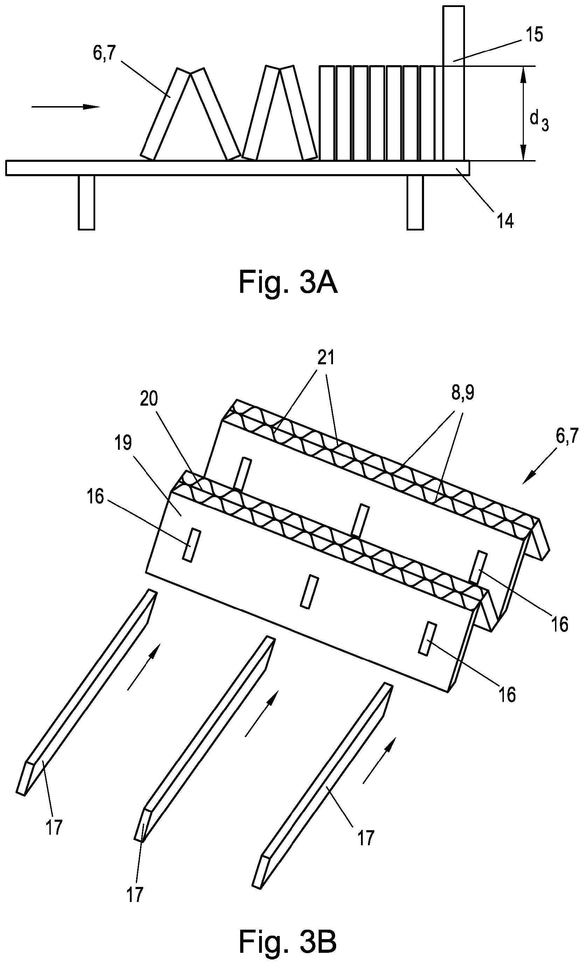

Vor der zumindest einen Absorptionsschicht 3 ist eine der Schallquelle S zugewandte Frontschicht 4 mit Öffnungen 5 zur Aufnahme des von der Schallquelle S ausgehenden Schalls angeordnet. Gemäß der ersten Ausführungsform gemäß Fig. 1A und 1B ist diese Frontschicht 4 aus zumindest zwei übereinander angeordneten Schall-Leitungsschichten 6, 7 mit jeweils durchgehenden Kanälen 8, 9 aufgebaut. Durch die Auswahl von Schall-Leitungsschichten 6, 7 mit Kanälen 8, 9 mit unterschiedlicher Größe A₁, A₂ sowie einem allfälligen versetzten Anordnen der Schall-Leitungsschichten 6, 7 zueinander und bzw. oder der Auswahl verschiedener Dicken d₂ für die Schall-Leitungsschichten 6, 7 kann eine Einstellung der zu absorbierenden Frequenzen f erzielt werden. Im Fall der Auswahl von Schall-Leitungsschichten 6, 7 mit Kanälen 8, 9 mit unterschiedlicher Größe A₁, A₂ weist die der Schallquelle S näherliegende Schall-Leitungsschicht 6 vorzugsweise Kanäle 8 mit größerer Größe A₁, beispielsweise zwischen 15 mm² und 25 mm², und die Schall-Leitungsschicht 7, welche der Absorptionsschicht 3 näher angeordnet ist, vorzugsweise Kanäle 9 mit kleinerer Größe A₂, beispielsweise zwischen 5 mm² bis 10 mm² auf. Die Schall-Leitungsschichten 6, 7 können in einfacher Weise aus Wellpappe gebildet sein, wobei entsprechende Wellpappe-Streifen mit Wasserglas zu einem Block verklebt werden können (siehe auch Fig. 3A und 3B).

Figur 1B zeigt Draufsichten bzw. Querschnitte der Schall-Leitungsschichten 6 und 7 des Schallabsorptionselements 1 gemäß Fig. 1A. Die der Absorptionsschicht 3 näher gelegene Schall-Leitungsschicht 6 kann aus feingliedriger Wellpappe, z.B. aus Wellpappe mit sog. E-, F- oder G-Wellen bestehen, wohingegen die der Schallquelle S näher gelegene Schall-Leitungsschicht 7 aus grobgliedriger Wellpappe, beispielsweise Wellpappe mit sog. A-, B- oder C-Wellen bestehen kann. Wichtig dabei ist, dass die Kanäle 8, 9 der Schall-Leitungsschichten 6, 7 durchgängig frei von der Vorderseite des Schallabsorptionselements 1 zu der darunter liegenden Absorptionsschicht 3 sind. Zur Einstellung der zu absorbierenden Frequenzen f des Schalls der Schallquelle S können die Schall-Leitungsschichten 6, 7 entsprechend modifiziert und variiert werden. Die äußerste Schall-Leitungsschicht 6 kann an der Oberfläche bearbeitet sein und beispielsweise auch reliefartig gefräst ausgebildet werden. Über der äußersten Schall-Leitungsschicht 6 und auch der Umhüllung 2 kann eine Abdeckschicht 11 vorzugsweise aus textilem Material, beispielsweise aus Jute, Schafwolle, Hanfwolle, Baumwolle oder anderer Wolle, angeordnet sein. Als textiles Material für die Abdeckschicht 11 kommt auch ein Gestrick in Frage, wobei verschiedene Stärken des Gestricks (von fein bis grob) und verschiedenste Farben (uni bis bunt) denkbar sind. Die Abdeckschicht 11 kann in Form einer abnehmbaren, dreidimensionalen "Husse" ausgebildet werden, und gegebenenfalls an eine Struktur der darunterliegenden Schall-Leitungsschicht 6, 7 angepasst sein. Auf diese Weise wird ein einfacher und rascher Tausch und eine einfache Reinigung der Abdeckung 11 ermöglicht. Über entsprechende Befestigungselemente, vorzugsweise an der Rückseite des Schallabsorptionselements 1, kann die Abdeckschicht 11 einfach und rasch befestigt werden (nicht dargestellt). Auf der Abdeckschicht 11 kann eine Beschichtung 12 aufgebracht werden, wie z.B. Farben, Putze oder andere pastöse Materialien, welche jedoch ein Eindringen des Schalls der Schallquelle S nicht oder nicht wesentlich behindern darf.

Zum Montieren der Schallabsorptionselements 1 können an der Umhüllung 2 entsprechenden Montagevorrichtungen 13 angeordnet sein. Diese Montagevorrichtung 13 können durch Haken oder dergl., Klettverschlüsse oder Standelemente gebildet sind, welche eine Befestigung des Schallabsorptionselements 1 an der Wand, Decke oder stehend am Boden ermöglichen.

Die zumindest eine Absorptionsschicht 3 und bzw. oder die zumindest eine Schall-Leitungsschicht 6, 7 können mit der Umhüllung 2 verklebt sein.

Selbstverständlich können auch mehrere Schallabsorptionselemente 1 kombiniert und zu ganzen Schallabsorptionswänden oder -einheiten zusammengefügt werden.

Erfahrungsgemäß sollte das Schallabsorptionselement 1 eine Gesamtstärke von etwa 12 cm aufweisen. Idealerweise ist die Dicke d₁ der Absorptionsschicht etwa 3 cm bis 5 cm und die Dicke d₂ der Schall-Leitungsschichten 6, 7 im Bereich von etwa 7 cm. Je dicker das Schallabsorptionselement 1 ausgeführt wird, um so höher ist der Absorptionsgrad. Durch ein Variieren der Dicken d₂ der Schall-Leitungsschichten 6, 7 können verschiedenste Frequenzen f des Schalls absorbiert werden. Durch ein Erhöhen der Dicke d₁ der Absorptionsschicht 3, beispielsweise auf 7 cm bis 8 cm kann der Absorptionsgrad, insbesondere für tiefere Frequenzen, noch weiter erhöht werden.

Zur Herstellung eines derartigen Schallabsorptionselements 1 sind die folgenden Herstellungsschritte notwendig:
1. Die Umhüllung 2 wird durch entsprechende Herstellung der Einzelteile, beispielsweise aus Holz, und Verklebung der Einzelteile aufgebaut.
2. Das zur Bildung der Absorptionsschicht 3 verwendete Absorptionsmaterial wird entweder lose in die Umhüllung 2 eingelegt oder mit dieser verbunden, beispielsweise verklebt.
3. Die der Absorptionsschicht 3 näher gelegene Schall-Leitungsschicht 7 wird in die Umhüllung 2 eingelegt und gegebenenfalls mit der Umhüllung 2 verbunden, insbesondere verklebt.
4. Gegebenenfalls wird die zumindest eine darüber angeordnete Schall-Leitungsschicht 6 in die Umhüllung 2 eingelegt und gegebenenfalls mit der Umhüllung 2 verbunden, insbesondere verklebt.
5. Gegebenenfalls wird die Oberfläche des entstandenen Schallabsorptionselements 1 beschichtet, beispielsweise mit einer offenporigen Farbe oder mit einer schalldurchlässigen Abdeckschicht 11 bespannt oder beklebt. Alternativ kann die Abdeckschicht 11 noch mit einer Beschichtung 12 versehen werden, oder auch die Oberfläche der obersten Schall-Leitungsschicht 7 bearbeitet, beispielsweise 3D-gefräst, werden, so dass reliefartige Oberflächen entstehen.

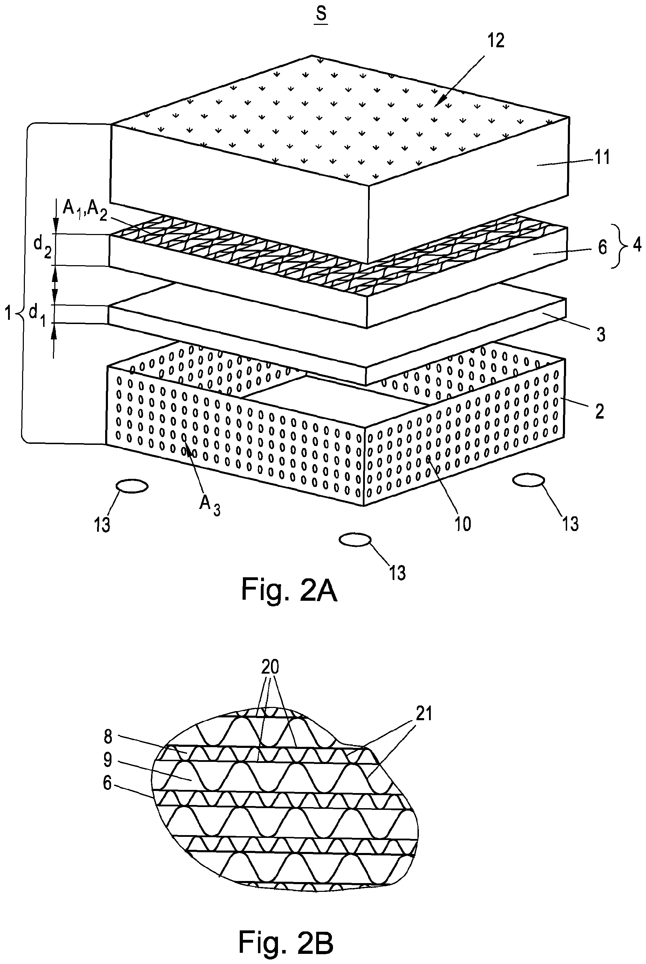

Fig. 2A und 2B zeigen eine Variante des Schallabsorptionselements 1 mit nur einer Schall-Leitungsschicht 6 mit durchgehenden Kanälen 8, 9 mit zwei verschiedenen Größen bzw. Querschnitten A₁, A₂. Die Draufsicht auf die Schall-Leitungsschicht 6 des Schallabsorptionselements 1 in Fig. 2B zeigt einen Aufbau einer aus Wellpappe bestehenden Ausführungsform, bei der die Kanäle 8, 9 durch die Hohlräume zwischen den wellenförmig angeordneten Wänden 21 und Deckschichten 19 bzw. Zwischenschichten 20 der Wellpappe gebildet sind. Durch entsprechenden Aufbau einer derartigen Schall-Leitungsschicht 6 kann das Schallabsorptionselement 1 für die Absorption bestimmter Frequenzen f des Schalls S eingesetzt und darauf eingestellt werden.

Fig. 3A und 3B zeigen einen bevorzugten Aufbau und eine bevorzugte Herstellungsmethode einer Schall-Leitungsschicht 6, 7 aus zumindest einem Stück Wellpappe mit der Länge nach verlaufenden Kanälen 8, 9, unter Verwendung eines Tischs 14 mit einem entsprechenden Anschlag 15. Die Deckschichten 19 und allfällige Zwischenschichten 20 der Wellpappe werden in regelmäßigen Abständen d₃ durchschnitten, sodass die Wellpappe zick-zack-förmig zusammengelegt werden kann und somit die Schall-Leitungsschicht 6, 7 mit zwischen der Oberseite und Unterseite durchgängigen Kanälen 8, 9 bildet. Wenn in den regelmäßigen Abständen d₃ der Wellpappe Schlitze 16 oder dergl. angeordnet sind, können im zusammengelegten Zustand der Wellpappe Stabilisierungsleisten 17 oder dergl. angeordnet werden, welche die Wellpappe im zusammengelegten Zustand entsprechend stabilisieren bzw. fixieren. Alternativ dazu oder auch zusätzlich kann die zick-zack-förmig zusammengelegte Wellpappe auch verklebt sein, beispielsweise mit Wasserglas. Sowohl die Wellpappe zum Aufbau der Schall-Leitungsschichten 6,7 als auch die Stabilisierungsleisten 17 und weitere Bestandteile des Schallabsorptionselements 1 können mit einer Imprägnierung, insbesondere aus Wasserglas, versehen sein.

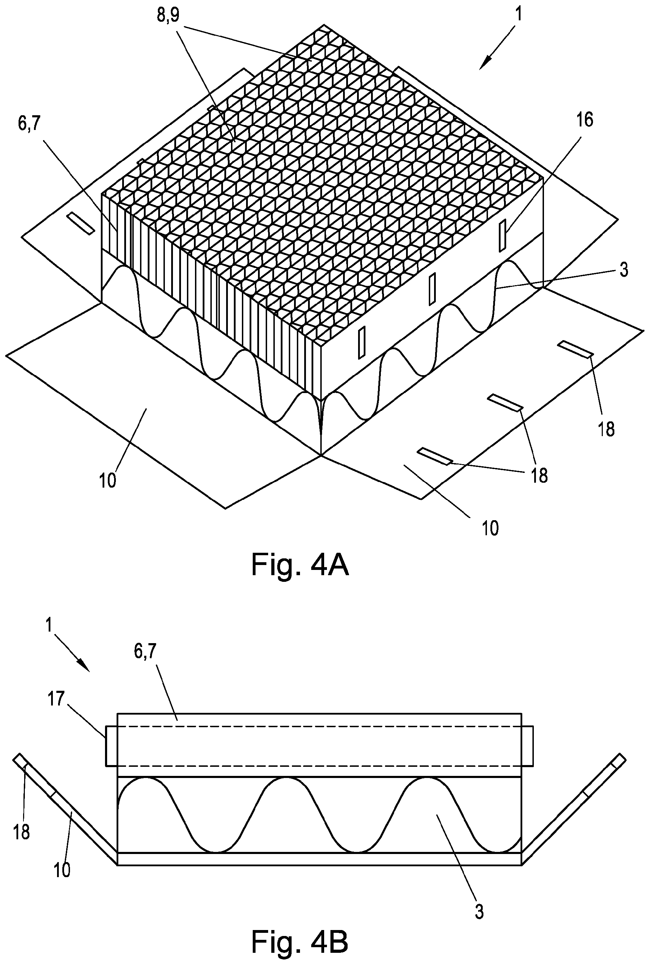

Fig. 4A und 4B zeigen den Aufbau eines Schallabsorptionselements 1 mit einer Schall-Leitungsschicht 6 mit Kanälen 8, 9 mit zumindest zwei verschiedenen Größen bzw. Querschnitten A₁, A₂. Die Umhüllung 2 besteht aus klappbaren Seitenwänden, wobei Löcher 18 oder Schlitze in der Umhüllung 2 vorsehen sein können, durch welche die Stabilisierungsleisten 17 zur Stabilisierung der zick-zack-förmig aufgebauten Schall-Leitungsschicht 6 (siehe Fig. 3A und 3B) angeordnet werden können. Auf diese Weise resultiert ein besonders einfach und rasch aufbaubares Schallabsorptionselement 1 mit hervorragenden Absorptionseigenschaften.

Das erfindungsgemäße Schallabsorptionselement kann relativ einfach und kostengünstig hergestellt werden und zeichnet sich auch durch eine einfache Befestigungsmöglichkeit aus. Bei Verwendung entsprechender ökologischer Grundmaterialien kann das Schallabsorptionselement 1 auch überall bedenkenlos eingesetzt werden. Die Schallabsorptionselemente 1 können insbesondere aber nicht ausschließlich für Wand- oder Deckenverkleidungen verwendet werden.

## Patentansprüche

1. Schallabsorptionselement (1) mit einer Umhüllung (2) und zumindest einer darin enthaltenen Absorptionsschicht (3) aus schallabsorbierendem Material und einer der Schallquelle (S) zugewandten Frontschicht (4) mit Öffnungen (5) zur Aufnahme des von der Schallquelle (S) ausgehenden Schalls, **dadurch gekennzeichnet, dass** als Frontschicht (4) zumindest eine aus Wellpappe gebildete Schall-Leitungsschicht (6, 7) mit durchgehenden Kanälen (8, 9) mit zumindest zwei verschiedenen Größen (A₁, A₂) vorgesehen ist, und die Kanäle (8, 9) der zumindest einen Schall-Leitungsschicht (6, 7) durch die Hohlräume zwischen wellenförmig angeordneten Wänden (21) und Deckschichten (19) und allfälligen Zwischenschichten (20) aus Wellpappe gebildet sind, und dass die zumindest eine Schall-Leitungsschicht (6, 7) vor der Absorptionsschicht (3) angeordnet ist, und wobei die Oberfläche der äußersten aus Wellpappe gebildeten Schall-Leitungsschicht (6) zur Erzeugung reliefartiger Strukturen dreidimensional bearbeitet ist.

2. Schallabsorptionselement (1) nach Anspruch 1, **dadurch gekennzeichnet, dass** die zumindest eine Schall-Leitungsschicht (6, 7) aus zumindest einem Stück Wellpappe mit der Länge nach verlaufenden Kanälen (8, 9) gebildet ist, deren Deckschichten (19) und allfällige Zwischenschichten (20) in regelmäßigen Abständen (d₃) durchschnitten sind, sodass die Wellpappe zick-zack-förmig zusammenlegbar ist und somit die Schall-Leitungsschicht (6, 7) mit zwischen der Oberseite und Unterseite durchgängigen Kanälen (8, 9) gebildet ist.

3. Schallabsorptionselement (1) nach Anspruch 2, **dadurch gekennzeichnet, dass** die Wellpappe in den regelmäßigen Abständen (d₃) Schlitze (16) oder dgl. zur Aufnahme von Stabilisierungsleisten (17) im zusammengelegten Zustand der Wellpappe aufweist.

4. Schallabsorptionselement (1) nach Anspruch 2 oder 3, **dadurch gekennzeichnet, dass** die zick-zack-förmig zusammengelegte Wellpappe verklebt ist, vorzugsweise mit Wasserglas.

5. Schallabsorptionselement (1) nach einem der Ansprüche 1 bis 4, **dadurch gekennzeichnet, dass** die Wellpappe mit einer Imprägnierung, insbesondere aus Wasserglas, versehen ist.

6. Schallabsorptionselement (1) nach einem der Ansprüche 1 bis 5, **dadurch gekennzeichnet, dass** die Größe (A₁) der einen Kanäle (8) der zumindest einen Schall-Leitungsschicht (6) zwischen 5 mm² und 10 mm² und die Größe (A₁) der zweiten Kanäle (9) der zumindest einen Schall-Leitungsschicht (6) zwischen 15 mm² und 25 mm² beträgt.

7. Schallabsorptionselement (1) nach einem der Ansprüche 1 bis 6, **dadurch gekennzeichnet, dass** die Umhüllung (2) Löcher (10, 18) aufweist oder aus porösem Material, beispielsweise Polyurethan-Schaum, besteht, und dass die Löcher (10) in der Umhüllung (2) vorzugsweise eine Größe (A₃) zwischen 5 mm² und 30 mm² aufweisen.

8. Schallabsorptionselement (1) nach einem der Ansprüche 1 bis 7, **dadurch gekennzeichnet, dass** die Umhüllung (2) klappbar ausgebildet ist.

9. Schallabsorptionselement (1) nach einem der Ansprüche 1 bis 8, **dadurch gekennzeichnet, dass** die Umhüllung (2) aus Holzwerkstoffen, Polyurethan-Schaum, Wellpappe oder mineralischen Materialien gebildet ist.

10. Schallabsorptionselement (1) nach einem der Ansprüche 1 bis 9, **dadurch gekennzeichnet, dass** zumindest eine Absorptionsschicht (3) aus Schafwolle, Hanf, Zellulose und bzw. oder Steinwolle gebildet ist.

11. Schallabsorptionselement (1) nach einem der Ansprüche 1 bis 10, **dadurch gekennzeichnet, dass** die zumindest eine Absorptionsschicht (3) eine Dicke (d₁) zwischen 5 und 10 cm, insbesondere 7 cm bis 8 cm aufweist.

12. Schallabsorptionselement (1) nach einem der Ansprüche 1 bis 11, **dadurch gekennzeichnet, dass** jede Schall-Leitungsschicht (6, 7) eine Dicke (d₂) zwischen 5 cm und 10 cm, insbesondere 7 cm bis 8 cm aufweist.

13. Schallabsorptionselement (1) nach einem der Ansprüche 1 bis 12, **dadurch gekennzeichnet, dass** über der äußersten Schall-Leitungsschicht (6) eine Abdeckschicht (11), vorzugsweise aus textilem Material, beispielsweise Jute, Schafwolle, Hanfwolle oder Baumwolle, angeordnet ist, und dass auf der Abdeckschicht (11) vorzugsweise eine poröse Beschichtung (12), wie beispielsweise Farben, Putze oder pastöse Materialien aufgebracht ist.

14. Schallabsorptionselement (1) nach einem der Ansprüche 1 bis 13, **dadurch gekennzeichnet, dass** an der Umhüllung (2) zumindest eine Montagevorrichtung (13) angeordnet ist.

15. Schallabsorptionselement (1) nach einem der Ansprüche 1 bis 14, **dadurch gekennzeichnet, dass** die zumindest eine Absorptionsschicht (3) und bzw. oder die zumindest eine Schall-Leitungsschicht (6, 7) mit der Umhüllung (2) verklebt ist.

## Claims

1. Sound absorbing element (1), comprising a covering (2) and at least one absorbing layer (3) contained therein and made of sound-absorbing material, and comprising a front layer (4) which faces the sound source (S) and has openings (5) for receiving the sound coming from the sound source (S), **characterised in that** at least one sound conduction layer (6, 7) which is formed from corrugated board and has continuous channels (8, 9) of at least two different sizes (A₁, A₂) is provided as the front layer (4), and the channels (8, 9) of the at least one sound conduction layer (6, 7) are formed by the cavities between corrugated walls (21) and outer layers (19) and any intermediate layers (20) made of corrugated board, and **in that** the at least one sound conduction layer (6, 7) is arranged in front of the absorbing layer (3), and the surface of the outermost sound conduction layer (6) which is formed from corrugated board being machined three-dimensionally so as to produce relief-like structures.

2. Sound absorbing element (1) according to claim 1, **characterised in that** the at least one sound conduction layer (6, 7) is formed from at least one piece of corrugated board having longitudinally extending channels (8, 9), the outer layers (19) and any intermediate layers (20) of which corrugated board are cut at regular intervals (d₃) such that the corrugated board can be folded in a zigzag shape and thus the sound conduction layer (6, 7) is formed having continuous channels (8, 9) between the top and bottom.

3. Sound absorbing element (1) according to claim 2, **characterised in that** the corrugated board has slits (16) or the like at regular intervals (d₃) for receiving stabilising slats (17) when the corrugated board is folded.

4. Sound absorbing element (1) according to either claim 2 or claim 3, **characterised in that** the zigzag folded corrugated board is glued, preferably using water glass.

5. Sound absorbing element (1) according to any of claims 1 to 4, **characterised in that** the corrugated board is provided with an impregnation, in particular made of water glass.

6. Sound absorbing element (1) according to any of claims 1 to 5, **characterised in that** the size (A₁) of the first channels (8) of the at least one sound conduction layer (6) is between 5 mm² and 10 mm² and the size (A₁) of the second channels (9) of the at least one sound conduction layer (6) is between 15 mm² and 25 mm².

7. Sound absorbing element (1) according to any of claims 1 to 6, **characterised in that** the covering (2) has holes (10, 18) or consists of porous material, for example polyurethane foam, and **in that** the holes (10) in the covering (2) preferably have a size (A₃) of between 5 mm² and 30 mm².

8. Sound absorbing element (1) according to any of claims 1 to 7, **characterised in that** the covering (2) is designed to be foldable.

9. Sound absorbing element (1) according to any of claims 1 to 8, **characterised in that** the covering (2) is formed from wooden materials, polyurethane foam, corrugated board or mineral materials.

10. Sound absorbing element (1) according to any of claims 1 to 9, **characterised in that** at least one absorbing layer (3) is formed from sheep's wool, hemp, cellulose and/or mineral wool.

11. Sound absorbing element (1) according to any of claims 1 to 10, **characterised in that** the at least one absorbing layer (3) has a thickness (d₁) of between 5 and 10 cm, in particular 7 cm to 8 cm.

12. Sound absorbing element (1) according to any of claims 1 to 11, **characterised in that** each sound conduction layer (6, 7) has a thickness (d₂) of between 5 cm and 10 cm, in particular 7 cm to 8 cm.

13. Sound absorbing element (1) according to any of claims 1 to 12, **characterised in that** a cover layer (11), preferably made of textile material, for example jute, sheep's wool, hemp wool or cotton, is arranged over the outermost sound conduction layer (6), and **in that** a porous coating (12), such as paint, plaster or highly viscous material, is preferably applied to the cover layer (11).

14. Sound absorbing element (1) according to any of claims 1 to 13, **characterised in that** at least one mounting device (13) is arranged on the covering (2).

15. Sound absorbing element (1) according to any of claims 1 to 14, **characterised in that** the at least one absorbing layer (3) and/or the at least one sound conduction layer (6, 7) is glued to the covering (2).

## Revendications

1. Élément d'absorption acoustique (1) avec une enveloppe (2) et au moins une couche d'absorption (3) contenue à l'intérieur de celle-ci, constituée d'un matériau absorbant les sons et une couche frontale (4) orientée vers la source sonore (S), avec des ouvertures (5) pour la prise en charge du son sortant de la source sonore (S), **caractérisé en ce que**, en tant que couche frontale (4), est prévue au moins une couche de conduction acoustique (6, 7) constituée de carton ondulé avec des canaux continus (8, 9) avec au moins deux tailles différentes (A₁, A₂) et les canaux (8, 9) de l'au moins une couche de conduction acoustique (6, 7) étant constitués des cavités entre des parois (21) disposées sous la forme d'ondulations et des couches de recouvrement (19) et d'éventuelles couches intermédiaire (20) en carton ondulé et **en ce que** l'au moins une couche de conduction acoustique (6, 7) est disposée avant la couche d'absorption (3) et la surface de la couche de conduction acoustique (6) constituée de carton ondulé, la plus externe, est travaillée de manière tridimensionnelle pour la réalisation de structures en relief.

2. Élément d'absorption acoustique (1) selon la revendication 1, **caractérisé en ce que** l'au moins une couche de conduction acoustique (6, 7) est constituée d'au moins une pièce de carton ondulé avec des canaux (8, 9) s'étendant sur la longueur, dont les couches de recouvrement (19) et les éventuelles couches intermédiaires (20) sont découpées à des intervalles réguliers (d₃), de façon à ce que le carton ondulé puisse être assemblé en zigzag et à ce que la couche de conduction acoustique (6, 7) soit donc formée avec des canaux continus (8, 9) entre le côté supérieur et le côté inférieur.

3. Élément d'absorption acoustique (1) selon la revendication 2, **caractérisé en ce que** le carton ondulé comprend, à intervalles réguliers (d₃), des fentes (16) ou autres pour le logement de baguettes de stabilisation (17) lorsque le carton ondulé est assemblé.

4. Élément d'absorption acoustique (1) selon la revendication 2 ou 3, **caractérisé en ce que** le carton ondulé assemblé en zigzag est collé, de préférence avec du verre soluble.

5. Élément d'absorption acoustique (1) selon l'une des revendications 1 à 4, **caractérisé en ce que** le carton ondulé est muni d'une imprégnation, plus particulièrement en verre soluble.

6. Élément d'absorption acoustique (1) selon l'une des revendications 1 à 5, **caractérisé en ce que** la taille (A₁) des canaux (8) de l'au moins une couche de conduction acoustique (6) est entre 5 mm² et 10 mm² et la taille (A₁) des deuxièmes canaux (9) de l'au moins une couche de conduction acoustique (6) est entre 15 mm² et 25 mm².

7. Élément d'absorption acoustique (1) selon l'une des revendications 1 à 6, **caractérisé en ce que** l'enveloppe (2) comprend des trous (10, 18) ou est constituée d'un matériau poreux, par exemple une mousse de polyuréthane, et **en ce que** les trous (10) dans l'enveloppe (2) présentent de préférence une taille (A₃) entre 5 mm² et 30 mm².

8. Élément d'absorption acoustique (1) selon l'une des revendications 1 à 7, **caractérisé en ce que** l'enveloppe (2) est conçue de façon à être pliable.

9. Élément d'absorption acoustique (1) selon l'une des revendications 1 à 8, **caractérisé en ce que** l'enveloppe (2) est constituée de matériaux à base de bois, d'une mousse en polyuréthane, de carton ondulé ou de matières minérales.

10. Élément d'absorption acoustique (1) selon l'une des revendications 1 à 9, **caractérisé en ce qu'**au moins une couche d'absorption (3) est constituée de laine de mouton, de chanvre, de cellulose et resp. ou de laine de roche.

11. Élément d'absorption acoustique (1) selon l'une des revendications 1 à 10, **caractérisé en ce que** l'au moins une couche d'absorption (3) présente une épaisseur (d₁) entre 5 et 10 cm, plus particulièrement de 7 cm à 8 cm.

12. Élément d'absorption acoustique (1) selon l'une des revendications 1 à 11, **caractérisé en ce que** chaque couche de conduction acoustique (6, 7) présente une épaisseur (d₂) entre 5 cm et 10 cm, plus particulièrement de 7 cm à 8 cm.

13. Élément d'absorption acoustique (1) selon l'une des revendications 1 à 12, **caractérisé en ce que**, au-dessus de la couche de conduction acoustique (6) la plus externe, est disposée une couche de recouvrement (11), de préférence en matériau textile, par exemple en jute, en laine de mouton, en laine de chanvre ou en coton, et **en ce que**, sur la couche de recouvrement (11) est appliqué un revêtement poreux (12), par exemple des peintures, du crépi ou des matières pâteuses.

14. Élément d'absorption acoustique (1) selon l'une des revendications 1 à 13, **caractérisé en ce que**, sur l'enveloppe (2) est disposé au moins un dispositif de montage (13).

15. Élément d'absorption acoustique (1) selon l'une des revendications 1 à 14, **caractérisé en ce que** l'au moins une couche d'absorption (3) et ou respectivement l'au moins une couche de conduction acoustique (6, 7) est collée avec l'enveloppe (2).
